# FASCICULE DE BREVET EUROPEEN

(11) **EP 2 204 600 B1**
(45) Date de publication et mention de la délivrance du brevet: **08.06.2011**
(21) Numéro de dépôt: 08291264.3
(22) Date de dépôt: 31.12.2008
(51) Int. Cl.: F16L 37/47, F16L 37/60

(54) **Prise de gaz pour raccordément entre un réseau fixe d'alimentation de fluide gazeux et un appareil alimenté par le fluide gazeux**
Gasanschluss für die Verbindung zwischen einem Festnetz zur Versorgung von gasförmigem Fluid und einem Gerät, das mit dem gasförmigen Fluid versorgt wird
Gas plug for connection between a fixed gaseous fluid supply network and a device supplied by the gaseous fluid

(43) Date de publication de la demande: 07.07.2010
(73) Titulaire: Eaton Hydraulics SAS, 74112 Annemasse Cedex (FR)
(72) Inventeur: Jenkins, George, Naperville, Illinois (US)
(74) Mandataire: Pautex Schneider, Nicole Véronique

(56) Documents cités:
- WO-A-2005/075868
- DE-A1-102006 010 565
- FR-A- 2 670 269

## Description

### Domaine de l'invention

L'invention concerne une prise de gaz alimentée d'une part de manière fixe par une conduite fixe d'alimentation de fluide gazeux, et permettant le branchement et le débranchement d'un embout de raccordement de type mâle qui alimente en fluide gazeux par tuyau souple un appareil fonctionnant au gaz.

### Art antérieur

De manière générale, les prises de gaz connues sont conçues pour permettre une connexion et une déconnexion simples et rapides entre un réseau fixe d'alimentation de fluide gazeux, notamment de gaz combustible, installé à l'intérieur d'un bâtiment et un appareil fonctionnant au gaz, tel que une cuisinière à gaz, un appareil de chauffage, un sèche-linge, ou un barbecue, par exemple.

Les prises de gaz connues comportent généralement un boîtier qui présente un raccord d'entrée de gaz prévu pour la réalisation d'un raccordement fixe de la prise de gaz avec une conduite de gaz fixe, un raccord de sortie de type femelle prévu pour brancher un embout de type mâle connecté par tuyau souple à l'appareil fonctionnant au gaz, et une vanne prévue pour bloquer le fluide en position déconnectée ou assurer la circulation de gaz lorsque l'embout est branché au raccord de sortie de gaz, comme décrit par exemple dans DE-A-35 199 33, WO-A-02/48597 et DE-A-10 2006 010 565.

DE-A-35 199 33 décrit une prise de gaz à vanne rotative, dans laquelle l'élément rotatif de la vanne tourne dans l'axe du raccord de sortie de la vanne.
Cette prise de gaz présente un corps de passage de gaz, tubulaire capable de tourner dans un boîtier et destiné à recevoir un embout de raccordement en gaz, et un canal d'entrée de gaz qui est orienté perpendiculairement au corps de passage du gaz. L'organe de blocage est composé d'une boule munie d'un canal de boule perpendiculaire, boule qui peut tourner autour de l'axe longitudinal du corps de passage du gaz. L'extrémité d'entrée du corps de passage du gaz fait saillie dans l'extrémité de sortie du canal de la boule et est couplée de manière solidaire en rotation avec la boule. La boule est en appui par ses côtés diamétralement opposés dans la direction longitudinale du canal d'entrée contre deux bagues d'étanchéités élastiques du boîtier, dont une bague d'étanchéité est disposée sur un raccord encastré dans le canal d'entrée, avec lequel la bague d'étanchéité peut être pressée contre la boule.

Cependant, dans cette prise de gaz, le perçage de branchement n'offre aucune protection contre les manipulations, en particulier pour la bague d'étanchéité qui se trouve dans ce perçage. De plus, cette prise de gaz ne comporte pas de dispositif de protection contre la pénétration d'un corps étranger à l'intérieur du perçage de branchement et contre l'action de la lumière sur la bague d'étanchéité. De plus, cette forme de réalisation n'est pas adaptée pour un montage encastré.

Pour pallier à ces inconvénients, il a été proposé par exemple dans WO-A-02/48597 (Mertik Maxitrol GmbH) et DE-A-10 2006 010 565 (Viega GmbH) des prises de gaz adaptées pour un montage soit en saillie soit encastré, et comportant un dispositif de protection permettant d'éviter la pénétration d'un corps étranger à l'intérieur du perçage de branchement, et plus généralement à l'intérieur du boîtier lorsque l'embout est débranché.

WO-A-02/48597 et DE-A-10 2006 010 565 décrivent par exemple une prise de gaz comportant un boîtier qui présente un raccord d'entrée de gaz prévu pour être connecté de manière permanente à une conduite de gaz fixe, un raccord de sortie de type femelle prévu pour brancher un embout adapté raccordé par tuyau souple à un appareil fonctionnant au gaz, et une vanne à clapet qui bloque le fluide en position déconnectée ou assure la circulation de gaz lorsque l'embout est branché de manière étanche au raccord de sortie.

La prise de gaz décrite dans WO-A-02/48597 comporte une façade de boîtier munie d'une ouverture allongée dans le sens vertical, et un capot de protection coulissant du côté aval de la façade de boîtier qui obture l'ouverture formée dans le boîtier lorsque l'embout n'est pas branché.

Le capot de protection comporte un orifice de placement d'embout ajusté à un dispositif de verrouillage du capot et situé dans une position décalée par rapport à l'orifice du raccord de sortie de gaz.

Pour déverrouiller le système de verrouillage du capot de protection, l'embout doit être inséré dans l'orifice de placement d'embout du capot de protection, et ensuite, pour que l'embout puisse être branché au raccord de sortie, l'embout doit être coulissé par translation, entraînant de force le capot de protection dans une position où l'orifice du raccord de sortie est accessible pour brancher l'embout.

Lors du débranchement de l'embout, le capot de protection revient automatiquement dans sa position initiale où il obture l'orifice du raccord de sortie de gaz.

Dans la prise de gaz décrite dans DE-A-10 2006 010 565, le raccord de sortie de gaz est logé dans un boîtier, et le boîtier comporte un capot de protection externe protégeant l'orifice de sortie de gaz, ce capot de protection étant muni d'un évidement externe et d'un dispositif de verrouillage interne qui peut être déverrouillé en insérant l'embout dans l'évidement.

Pour brancher l'embout sur le raccord de sortie de gaz, il faut insérer l'embout dans l'évidement pour déverrouiller le capot, puis tenir le capot déverrouillé pour brancher l'embout.

Lors du débranchement de l'embout, le capot de protection revient automatiquement dans sa position initiale où il obture l'orifice du raccord de sortie de gaz.

Ainsi, dans ces prises de gaz, le capot de protection est déverrouillé au moyen de l'embout.

Un inconvénient majeur commun à ces prises de gaz est qu'une traction appliquée au niveau de l'embout peut conduire à une déconnexion accidentelle de l'embout.

En outre, ces prises de gaz comportent un mécanisme de verrouillage ainsi qu'un obturateur à clapet, ce qui rend leur production onéreuse.

L'utilisation d'un obturateur à clapet classique requiert de manière impérative le verrouillage du capot de protection pour empêcher des manoeuvres manuelles du clapet d'obturation.

De plus, en cas de disfonctionnement du clapet, l'embout peut être déconnecté même si le clapet n'est pas fermé.

De plus, ces prises de gaz ne comportent pas d'indicateur d'ouverture de vanne.

De plus, la prise de gaz décrite dans WO-A-02/48597 (Mertik Maxitrol GmbH) nécessite l'utilisation d'un embout coudé plus onéreux qu'un embout droit.

On connaît en outre par le document WO-A-2005/075868 (Oetiker) un raccord de sécurité pour circuit de fluide sous pression, notamment d'air comprimé, destiné à connecter deux conduites de fluides sous pression et comportant une vanne rotative.

Ce raccord de sécurité comporte une vanne comprenant un corps de vanne comportant un raccord d'entrée de fluide sous pression ainsi qu'un boisseau sphérique fixé en rotation à l'intérieur du corps de vanne et comportant un raccord de sortie de fluide sous pression de type femelle destiné à raccorder un embout de type mâle, ledit boisseau sphérique étant conçu pour pivoter entre une position où l'axe du raccord d'entrée dans le corps de vanne est à un angle de 90° par rapport à l'axe du raccord de sortie du boisseau sphérique et où la vanne est fermée, et une position où l'axe du raccord d'entrée est en alignement de l'axe du raccord de sortie et où la vanne est ouverte.

Dans ce raccord de sécurité, le corps de vanne est entouré d'un manchon externe de protection hémisphérique comportant une ouverture et pouvant pivoter autour du corps de vanne de manière soit à protéger l'orifice du raccord de sortie lorsque l'embout est débranché, soit à permettre le dégagement du raccord de sortie du boisseau sphérique pour connecter l'embout, soit à bloquer la rotation de l'embout lorsque celui-ci est connecté dans le raccord de sortie et que la vanne est ouverte.

Pour connecter l'embout sur le raccord de sortie, il faut faire pivoter de force le manchon autour du corps de vanne de manière à rendre accessible le raccord de sortie, brancher l'embout sur le raccord de sortie tout en maintenant manuellement le manchon, puis faire pivoter l'embout sur le raccord de sortie du boisseau sphérique jusqu'à ce l'axe du raccord de sortie soit dans l'axe du raccord d'entrée et que la vanne soit ouverte.

Lorsque la vanne est ouverte, le manchon revient dans sa position initiale pour verrouiller le boisseau sphérique muni de l'embout de manière à empêcher sa rotation et éviter ainsi une déconnexion accidentelle de l'embout.

Ce raccord de sécurité présente un inconvénient en ce que le déverrouillage du boisseau sphérique peut être effectué même si l'embout n'est pas branché.

De plus, ce raccord de sécurité de fluide sous pression est conçu pour raccorder deux tuyaux souples, et n'est pas du tout adapté pour être utilisé comme une prise de gaz murale destinée à être raccordée de manière fixe à un réseau fixe d'alimentation de fluide gazeux.

La présente invention se propose de fournir une prise de gaz murale destinée à être raccordée de manière fixe à un réseau fixe d'alimentation de fluide gazeux, qui remédie aux inconvénients des prises de gaz connues.

### Exposé de l'invention

La présente invention a pour objet une prise de gaz destinée à être raccordée de manière fixe à un réseau fixe d'alimentation de fluide gazeux, et permettant le branchement et le débranchement d'un embout de raccordement de type mâle adapté qui alimente en fluide gazeux par tuyau souple un appareil fonctionnant au gaz, ladite prise de gaz comportant un boîtier comportant une façade munie d'une ouverture verticale allongée et un capot de protection prévu pour obturer l'ouverture dans la façade du boîtier, ledit boîtier logeant une vanne rotative comportant un corps de vanne et un boisseau sphérique, dans laquelle : ledit corps de vanne est fixé au boîtier, et comporte du côté amont un raccord d'entrée de fluide gazeux intégré pour raccordement fixe à une conduite fixe d'alimentation de fluide gazeux, et comporte du côté aval un logement de montage intégré pour le montage en rotation du boisseau sphérique, la partie du côté aval du logement de montage comportant une ouverture, ledit boisseau sphérique comporte du côté aval, face à l'ouverture de la façade de boîtier, un raccord de sortie de fluide gazeux intégré prévu pour brancher un embout de raccordement de type mâle adapté, ledit boisseau sphérique étant conçu pour pivoter sur un axe de rotation entre une position où la vanne est fermée et une position où la vanne est ouverte, ladite ouverture verticale allongée dans la façade étant conçue pour permettre le branchement de l'embout de raccordement sur le raccord de sortie et le pivotement de l'embout de raccordement lorsque celui-ci est branché sur le raccord de sortie, ladite prise de gaz comportant en outre : un système de verrouillage qui empêche la rotation du boisseau sphérique par verrouillage du boisseau sphérique sur le corps de vanne lorsque la vanne est fermée et par verrouillage de l'embout de raccordement sur le corps de vanne après branchement de celui-ci sur le raccord de sortie lorsque la vanne est ouverte, et qui après déverrouillage du boisseau sphérique sur le corps de vanne ou déverrouillage de l'embout de raccordement sur le corps de vanne, retient l'embout de raccordement sur le corps de vanne durant les opérations d'ouverture et de fermeture de la vanne par rotation, et un moyen de fermeture du capot de protection permettant un rappel automatique du capot de protection vers une position initiale dans laquelle il obture complètement l'ouverture dans la façade du boîtier.

La vanne rotative peut comporter un dispositif prévu pour assurer l'étanchéité entre le corps de vanne et le boisseau sphérique.

Le raccord de sortie peut comporter sur sa surface extérieure du côté aval au moins un joint torique d'étanchéité.

De préférence, le système de verrouillage qui empêche la rotation du boisseau sphérique est conçu pour être déverrouillé par une poussée axiale de l'embout de raccordement sur le raccord de sortie.

Le système de verrouillage peut comporter des parties usinées dans la surface intérieure du logement de montage pour boisseau sphérique du corps de vanne et des éléments situés en amont sur le raccord de sortie du boisseau sphérique.

Dans une forme d'exécution préférée de la présente invention, le capot de protection est monté en rotation par rapport à la façade du boîtier sur un axe de rotation de telle sorte qu'il puisse pivoter autour de l'axe de rotation du boisseau sphérique, et la façade du boîtier comporte une partie de façade comportant l'ouverture verticale allongée et une fente formant un passage pour le capot de protection, ledit capot de protection étant conçu de manière à permettre sa révolution en passant à travers la fente de la façade de boîtier sans toucher l'extrémité du raccord de sortie du boisseau sphérique.

Le moyen de fermeture du capot de protection comprend de préférence un ressort de torsion monté sur l'axe de rotation du capot de protection.

La partie de façade est de préférence une partie de façade en saille ayant une forme de révolution autour de l'axe de rotation du capot de protection.

De préférence, la partie de façade en saillie comporte un premier indicateur visuel et un second indicateur visuel différent du premier indicateur visuel, le capot de protection comporte au moins un orifice obturé par une lentille transparente, cette lentille transparente permettant de voir le premier indicateur visuel ou le second indicateur visuel sur la partie de façade derrière le capot de protection selon un état de fermeture du capot de protection correspondant à un état de fermeture de la vanne ou à un état d'ouverture de la vanne.

Le premier indicateur visuel est de préférence une pastille verte, ledit second indicateur visuel est de préférence une pastille rouge, ladite lentille transparente permettant de voir ladite pastille rouge lorsque la vanne est fermée et ladite pastille verte lorsque la vanne est ouverte.

Dans une forme d'exécution préférée de la présente invention, ledit corps de vanne comporte dans la surface intérieure du logement de montage pour boisseau sphérique, symétriquement en partant du côté aval de chaque côté de l'ouverture, un lamage, une première rainure de guidage courbée et une seconde rainure de guidage courbée légèrement plus éloignée de l'axe de rotation du boisseau sphérique que la première rainure de guidage, ledit lamage et lesdites première et seconde rainures étant des parties usinées dans la surface intérieure du logement de montage pour boisseau sphérique du corps de vanne et faisant partie du système de verrouillage, ledit raccord de sortie comporte sur sa partie amont une gorge servant d'appui à un ressort de compression, et comporte du côté aval du ressort de compression une bague de verrouillage pouvant coulisser sur le raccord de sortie, ces éléments faisant partie du système de verrouillage.

De préférence, la bague de verrouillage sur le raccord de sortie du boisseau sphérique est bloquée dans le lamage du corps de vanne lorsque la vanne est fermée, bloquant ainsi la rotation du boisseau sphérique, ladite bague de verrouillage pouvant être dégagée du lamage par une poussée axiale de l'embout de raccordement après branchement de celui-ci sur le raccord de sortie pour déverrouiller le boisseau sphérique sur le corps de vanne et permettre la rotation du boisseau sphérique.

De préférence, un épaulement extérieur de l'embout de raccordement est en butée contre une surface de blocage formée à l'extrémité aval de la seconde rainure de guidage par le décalage entre les deux rainures de guidage lorsque la vanne est ouverte, bloquant ainsi la rotation du boisseau sphérique, ledit épaulement de l'embout de raccordement pouvant être dégagé de ladite surface de blocage par une poussée axiale de l'embout de raccordement sur le raccord de sortie pour déverrouiller l'embout de raccordement sur le corps de vanne et permettre la rotation du boisseau sphérique.

De préférence, un épaulement extérieur de l'embout de raccordement est retenu dans l'une des première et seconde rainures de guidage durant l'opération d'ouverture et de fermeture de la vanne par rotation après déverrouillage du boisseau sphérique sur le corps de vanne ou déverrouillage de l'embout de raccordement sur le corps de vanne.

De préférence, l'embout de raccordement adapté comporte une extrémité de branchement comportant un diamètre intérieur sensiblement égal au diamètre extérieur du raccord de sortie de façon à ce que l'embout de raccordement puisse coulisser sur la surface extérieure du raccord de sortie, ladite extrémité de branchement comportant en outre une collerette comportant un épaulement, la surface intérieure de l'embout de raccordement adapté comportant en outre un épaulement formant une butée pour l'extrémité aval du raccord de sortie lorsque l'embout est coulissé jusqu'en fin de course sur la surface extérieure du raccord de sortie, la surface extérieure de l'embout de raccordement comportant en outre un épaulement situé en retrait du côté aval par rapport à l'épaulement intérieur de manière à ce que cet épaulement extérieur ne bute pas contre le capot de protection avant que l'embout de raccordement n'ait atteint sa position de fin de course en butée contre le raccord de sortie.

D'autres caractéristiques, buts et avantages de la présente invention ressortiront plus clairement de la description détaillée suivante de deux formes d'exécution préférées, indiquées à titre non limitatif et illustrées par les dessins annexés.

### Description des Figures

La Figure 1 représente une coupe longitudinale d'une prise de gaz murale en saillie selon une forme d'exécution préférée de la présente invention, dans une position de non-utilisation où l'embout de raccordement n'est pas branché, le boisseau sphérique est verrouillé sur le corps de vanne, la vanne est fermée et le capot de protection obture l'ouverture dans la façade du boîtier.
La Figure 2 représente une coupe transversale de la prise de gaz représentée sur la Figure 1.
La Figure 3 représente une vue en perspective du corps de vanne de la prise de gaz murale représentée sur la Figure 1.
La Figure 4 représente une coupe longitudinale d'un embout de raccordement préféré adapté pour la prise de gaz selon l'invention.
La Figure 5 représente une coupe longitudinale de la prise de gaz représentée sur la Figure 1 avant le déverrouillage du boisseau sphérique, dans une position où l'embout de raccordement est branché sur le raccord de sortie, l'étanchéité est établie entre l'embout de raccordement et le boisseau sphérique, la vanne est fermée et le capot de protection est ouvert.
La Figure 6 représente une coupe transversale de la prise de gaz représentée sur la Figure 5.
La Figure 7 représente une vue en perspective suivant l'axe A de la prise de gaz représentée sur la Figure 5, sans le boîtier.
La Figure 8 représente une coupe longitudinale de la prise de gaz représentée sur la Figure 1 dans une position où l'embout de raccordement est branché sur le raccord de sortie, le boisseau sphérique est déverrouillé, la vanne est encore fermée, et le capot de protection est en appui sur l'embout de raccordement.
La Figure 9 représente une coupe transversale de la prise de gaz représentée sur la Figure 8.
La Figure 10 représente une coupe longitudinale de la prise de gaz représentée sur la Figure 1 dans une position où l'embout de raccordement est branché sur raccord de sortie, l'embout de raccordement est verrouillé sur le corps de vanne de manière à bloquer la rotation du boisseau sphérique, la vanne est ouverte, et le capot de protection est en appui sur l'embout de raccordement.
La Figure 11 représente une coupe transversale de la prise de gaz représentée sur la Figure 10.
La Figure 12 représente une vue en perspective d'une façade de boîtier préférée de la prise de gaz selon l'invention.
La Figure 13 représente une vue de face de la façade de boîtier représentée sur la Figure 12.
Les Figures 14a - 14f montrent le principe de fonctionnement de la prise de gaz murale en saillie selon la présente invention, avec représentation de la prise de gaz en perspective.
La Figure 15 représente une coupe longitudinale d'une prise de gaz murale encastrée selon une autre forme d'exécution préférée de la présente invention, dans une position de non-utilisation où l'embout de raccordement n'est pas branché, le boisseau sphérique est verrouillé sur le corps de vanne, la vanne est fermée et le capot de protection obture l'ouverture dans la façade du boîtier.
La Figure 16 représente une coupe transversale de la prise de gaz murale encastrée représentée sur la Figure 15.

### Description des signes de référence

- 1: prise de gaz
- 2: boîtier
- 3: façade de boîtier
3a première partie de façade
3b seconde partie de façade en saillie
3c trous de fixation
3d fente dans façade
- 4: ouverture verticale allongée
- 5: capot de protection
- 6: corps de vanne
- 7: boisseau sphérique
- 8: joint de forme
- 9: raccord d'entrée de fluide
- 10: oreilles de fixation
- 11: trous de fixation
- 12: logement de montage pour boisseau sphérique
- 13: paliers de montage pour boisseau sphérique
- 14: logements de fixation
- 15: ouverture du logement de montage
- 16: adaptateur
- 17: raccord de sortie
- 18: embout de raccordement
18a extrémité de branchement de l'embout
18b collerette
18c épaulement de la collerette
18d épaulement intérieur
18e épaulement extérieur
- 19: première pastille de couleur verte
- 20: seconde pastille de couleur rouge
- 21: lamage
- 22: première rainure courbée
- 23: seconde rainure courbée
- 24: joint torique d'étanchéité
- 25: gorge
- 26: ressort de compression
- 27: bague de verrouillage
- 28: ressort de torsion
- 29: axe de rotation du capot de protection
- 30a: lentille transparente supérieure obturant un premier orifice dans le capot de protection
- 30b: lentille transparente inférieure obturant un second orifice dans le capot de protection

### Description détaillée de l'invention

La prise de gaz de la présente invention est une prise de gaz destinée à être raccordée de manière fixe à une conduite fixe d'alimentation de fluide gazeux, et elle permet le branchement et le débranchement sécurisés d'un embout de raccordement de type mâle adapté qui alimente en fluide gazeux par tuyau souple un appareil fonctionnant au gaz.

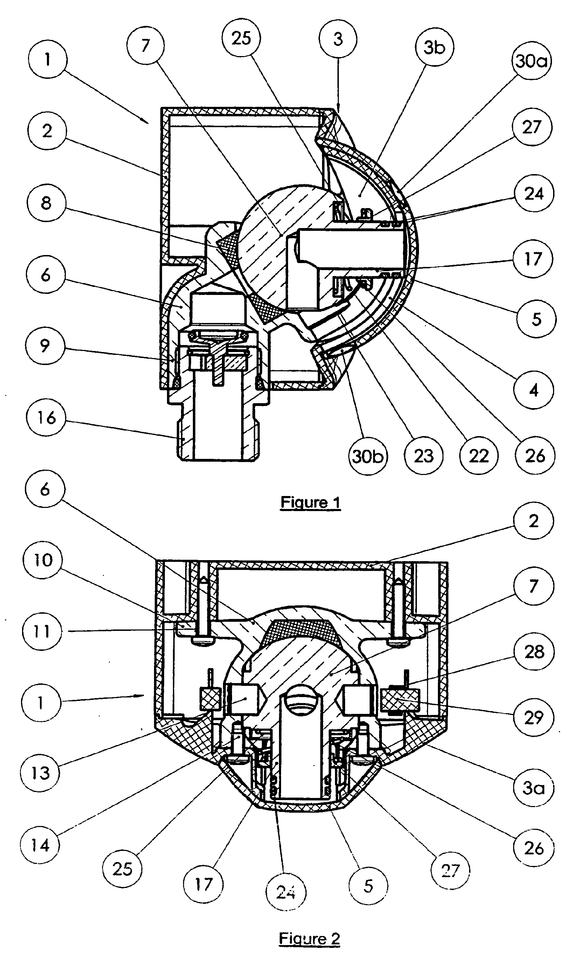

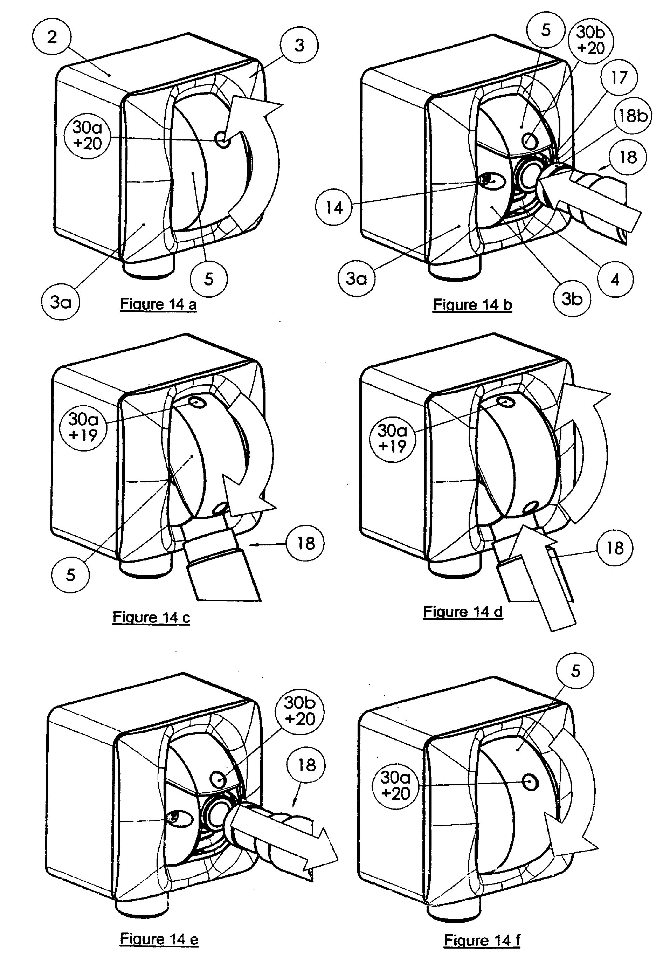

Les Figures 1 à 13 montrent une forme d'exécution préférée d'une prise de gaz murale en saillie de la présente invention dans ses différentes situations de fonctionnement ou des éléments spécifiques de celle-ci et les Figures 14a-14d montrent le principe de fonctionnement de cette prise de gaz, étant entendu que les numéros de références indiqués sur ces Figures sont identiques lorsque des parties identiques sont désignées.

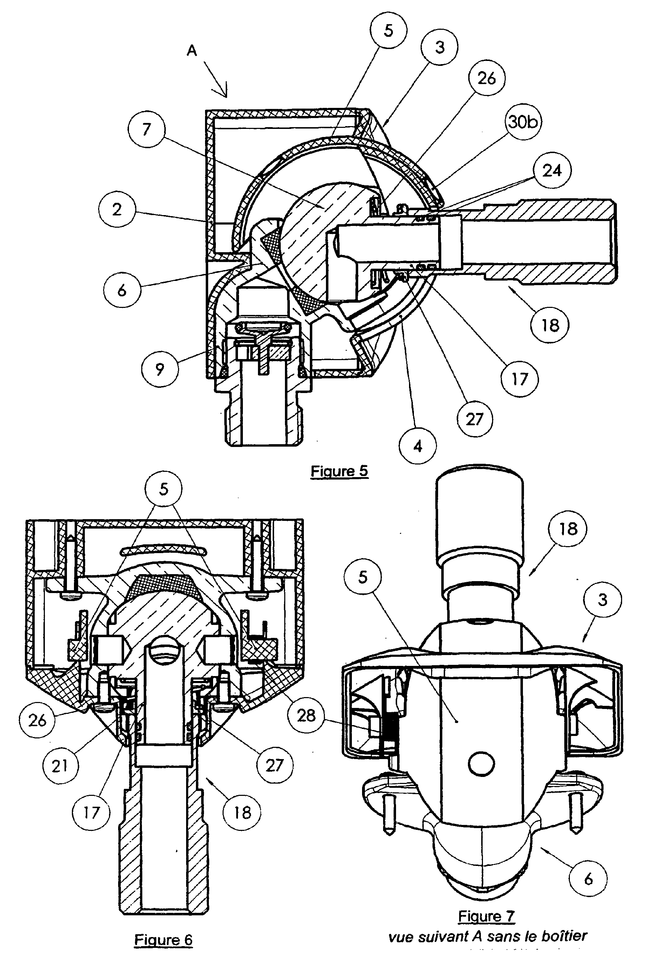

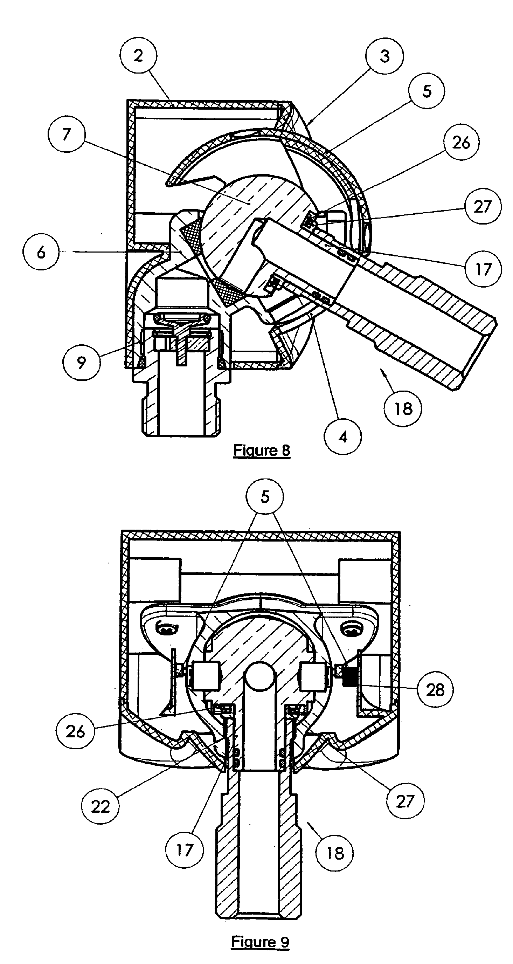

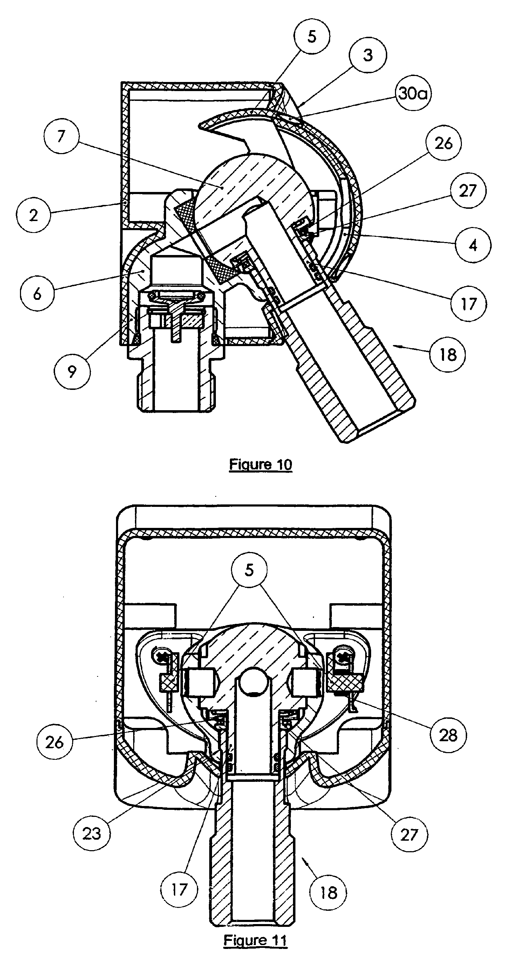

Plus particulièrement, les Figures 1 et 2 montrent cette prise de gaz dans une position où l'embout de raccordement n'est pas branché, le boisseau sphérique est verrouillé sur le corps de vanne, la vanne est fermée et le capot de protection obture l'ouverture dans la façade du boîtier, les Figures 5, 6 et 7 montrent cette prise de gaz avant le déverrouillage du boisseau sphérique, dans une position où l'embout de raccordement est branché sur le raccord de sortie, l'étanchéité est établie entre l'embout de raccordement et le boisseau sphérique, la vanne est fermée et le capot de protection est ouvert, les Figures 8 et 9 montrent cette prise de gaz dans une position où l'embout de raccordement est branché sur le raccord de sortie, l'embout de raccordement est retenu sur le corps de vanne de manière à empêcher sa déconnexion, le boisseau sphérique est déverrouillé, la vanne est encore fermée, le capot de protection est en appui sur l'embout de raccordement, et les Figures 10 et 11 montrent cette prise de gaz dans une position où l'embout de raccordement est branché sur le raccord de sortie, l'embout de raccordement est verrouillé sur le corps de vanne de manière à bloquer la rotation du boisseau sphérique, la vanne est ouverte, et le capot de protection est en appui sur l'embout de raccordement.

En se référant à ces Figures, la prise de gaz murale **1** conforme à la présente invention comporte un boîtier **2** comportant une façade **3** munie d'une ouverture verticale allongée **4** ainsi q'un capot de protection 5 monté en rotation et prévu pour obturer l'ouverture **4** dans la façade **3** du boîtier **2** afin d'empêcher la pénétration de corps étrangers dans le boîtier.

Le boîtier **2** loge une vanne rotative comprenant un corps de vanne **6,** un boisseau sphérique **7,** et un joint de forme **8** assurant l'étanchéité entre le corps de vanne **6** et le boisseau sphérique **7.**

Il faut noter cependant que n'importe quel autre dispositif capable d'assurer l'étanchéité entre le corps de vanne et le boisseau sphérique peut être utilisé.

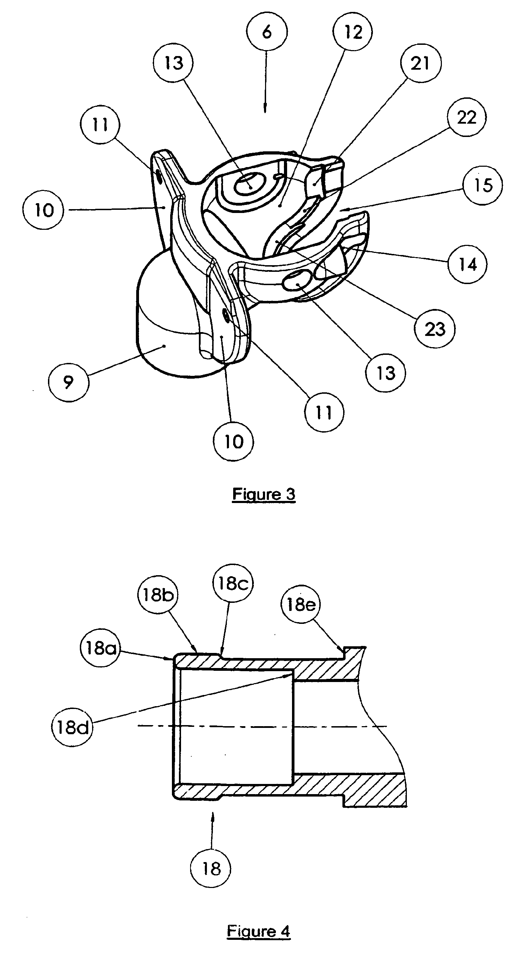

En se référant également à la Figure 3, le corps de vanne **6** comporte un raccord d'entrée de fluide **9** intégré, deux oreilles de fixation **10** intégrées comportant des trous de fixation **11** pour fixation du corps de vanne au boîtier **2,** ainsi qu'un logement de montage **12** intégré comportant deux paliers **13** pour le montage en rotation du boisseau sphérique **7** et des logements de fixation **14** pour fixation du corps de vanne **6** à la façade **3.**

Le raccord d'entrée de fluide **9** est situé du côté amont du corps de vanne **6** et le logement de montage **12** est situé du côté aval du corps de vanne **6,** la partie du côté aval du logement de montage **12** comportant une ouverture **15.**

Le raccord d'entrée de fluide **9** peut être connecté à n'importe quelle conduite fixe d'alimentation de fluide gazeux au moyen d'un adaptateur **16** approprié.

La conduite fixe d'alimentation de fluide gazeux peut être une conduite de réseau d'alimentation de gaz combustible installé dans un bâtiment, mais peut également être une conduite fixe d'alimentation de n'importe quel autre fluide gazeux, par exemple une conduite fixe d'alimentation d'oxygène dans un hôpital, une conduite fixe d'alimentation de gaz inerte comme l'azote ou l'argon dans un laboratoire ou un atelier de production, ou autres.

On notera que la prise de gaz de la présente invention est particulièrement bien adaptée pour des pressions de gaz allant jusqu'à 50 hectopascals (50 millibars). Toutefois, la prise de gaz de la présente invention peut également être utilisée pour des pressions de gaz supérieures.

Comme représenté plus particulièrement sur les Figure 2, 6, 9 et 11, le boisseau sphérique **7** est monté en rotation dans le logement de montage **12** du corps de vanne **6** au niveau des paliers **13** de manière à pouvoir pivoter entre la position où la vanne est fermée telle que représentée sur les Figures 1 et 2 et la position où la vanne est ouverte telle que représentée sur les Figures 10 et 11.

Le boisseau sphérique **7** comporte du côté aval un raccord de sortie **17** intégré face à l'ouverture **15** du logement de montage **12** et par conséquent face à l'ouverture **4** dans la façade **3** du boîtier.

Le raccord de sortie **17,** de type femelle, est destiné à brancher un embout de raccordement **18** de type mâle adapté tel que représenté sur la Figure 4 que l'on décrira ultérieurement.

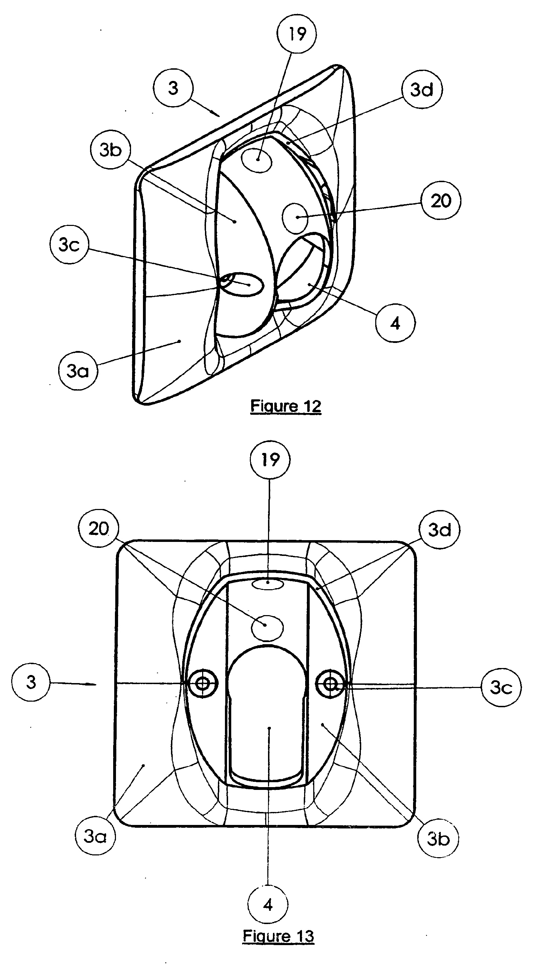

On notera que dans cette forme d'exécution préférée de la présente invention, la façade de boîtier **3** est une façade de boîtier intégrée comportant, comme représenté plus en détail sur les Figures 12 et 13, une première partie de façade **3a** de forme essentiellement plate légèrement bombée dictée par l'esthétique et une seconde partie de façade **3b** en saillie ayant une forme de révolution autour de l'axe de rotation du capot de protection **5** comportant des trous de fixation **3c,** et comportant en outre une fente **3d** située à la jonction des première et seconde parties de façade **3a** et **3b** dans la partie supérieure de la façade, cette fente **3d** formant un passage pour le capot de protection **5,** l'ouverture verticale allongée **4** permettant le branchement de l'embout de raccordement **18** et la rotation du boisseau sphérique **7** muni de l'embout de raccordement **18** pour ouvrir la vanne.

En outre, dans cette forme d'exécution particulièrement préférée de la présente invention, la partie supérieure de la seconde partie de façade **3b** comporte une première pastille **19** de couleur verte située proche de la fente **3d** et une seconde pastille **20** de couleur rouge située proche de l'extrémité supérieure de l'ouverture allongée **4.**

Comme représenté plus particulièrement sur les Figures 2, 6, 9 et 11, le corps de vanne **6** est fixé à la partie arrière du boîtier **2** par des moyens de fixation traversant les trous de fixation **11** et est fixé à la façade de boîtier **3** par des moyens de fixation traversant les trous de fixation **3c** dans la seconde partie de façade **3b** et vissés dans des logements de fixation **14** du corps de vanne **6.**

On notera que dans cette forme d'exécution préférée présentée uniquement à titre d'exemple, le corps de vanne **6** est fixé à la fois au boîtier **2** et à la façade de boîtier **3.** Cependant, il doit être compris que seule la fixation du corps de vanne **6** au boîtier **2** est nécessaire, et cela par n'importe quel moyens de fixation.

Dans cette forme d'exécution, la face arrière du boîtier **2** est fixée à l'extérieur d'un mur, et par conséquent la prise de gaz est en saillie à l'extérieur du mur.

Comme représenté plus particulièrement sur la Figure 3, le corps de vanne **6** comporte en outre, dans la surface intérieure du logement de montage **12,** symétriquement en partant du côté aval de chaque côté de l'ouverture **15,** un lamage **21,** une première rainure de guidage **22** courbée et une seconde rainure de guidage **23** courbée légèrement plus éloignée de l'axe de rotation du boisseau sphérique **7** que la première rainure de guidage **22,** ces différentes parties usinées faisant partie du système de verrouillage de la vanne.

Comme on peut le voir sur la Figure 1, le raccord de sortie **17** comporte sur sa surface extérieure du côté aval deux joints toriques d'étanchéité **24.**

En outre, le raccord de sortie **17** comporte sur sa partie amont une gorge **25** servant d'appui à un ressort de compression **26,** et comporte du côté aval du ressort de compression une bague de verrouillage **27** pouvant coulisser sur le raccord de sortie **17,** ces différents éléments faisant partie du système de verrouillage de la vanne.

Le capot de protection **5** est monté en rotation par rapport à la façade **3** de telle sorte qu'il puisse pivoter autour de l'axe de rotation du boisseau sphérique et est conçu de manière à permettre sa révolution en passant à travers la fente **3d** de la façade de boîtier sans toucher l'extrémité du raccord de sortie **17** du boisseau sphérique **7.**

Un ressort de torsion **28** est monté sur l'axe de rotation **29** du capot de protection.

Le ressort de torsion **28** constitue un moyen de fermeture du capot de protection et permet un retour automatique de celui-ci vers sa position initiale dans laquelle il obture complètement l'ouverture **4** dans la façade du boîtier **3,** comme représenté plus particulièrement sur les Figures 1, 2 et 14a.

De plus dans cette forme particulièrement préférée de la présente invention, le capot de protection comporte un premier orifice obturé par une lentille transparente **30a** et un second orifice obturé par une lentille transparente **30b,** ces lentilles transparentes permettant de voir la partie de façade **3b** portant les pastilles verte **19** et rouge **20** derrière le capot de protection **5.**

Le corps de vanne **6** et le boisseau sphérique **7** peuvent être fabriqués dans n'importe quel matériau métallique approprié pour une utilisation dans une prise gaz.

La bague de verrouillage **27** peut être fabriquée dans n'importe quel matériau métallique approprié pour une utilisation telle que décrite ci-dessus.

Le ressort de compression **26** et le ressort de torsion **28** peuvent être fabriqués dans n'importe quel matériau métallique approprié pour une utilisation telle que décrite ci-dessus.

Les joints d'étanchéité peuvent être fabriqués dans n'importe quel élastomère approprié pour une utilisation dans une prise de gaz murale.

Le boîtier **2,** la façade **3** et le capot de protection **5** peuvent être fabriqués dans n'importe quel matériau plastique approprié pour une utilisation dans une prise de gaz murale.

En se référant plus particulièrement à la Figure 4, un embout de raccordement **18** adapté pour le branchement sur le raccord de sortie **17** de la prise de gaz de la présente invention comporte une extrémité de branchement **18a** comportant un diamètre intérieur sensiblement égal au diamètre extérieur du raccord de sortie **17** de façon à ce que l'embout de raccordement **18** puisse coulisser sur la surface extérieure du raccord de sortie **17.**

Cette extrémité de branchement **18a** comporte également une collerette **18b** comportant un épaulement **18c** dont la dimension et la forme sont adaptées pour un engagement et un coulissement dans les rainures de guidage **22, 23.**

En outre la surface intérieure de l'embout de raccordement **18** comporte un épaulement **18d** circonférentiel à une distance appropriée pour que cet épaulement **18d** forme une butée pour l'extrémité aval du raccord de sortie **17** lorsque l'embout de raccordement **18** est coulissé jusqu'en fin de course sur la surface extérieure du raccord de sortie **17.**

En outre, la surface extérieure de l'embout de raccordement **18** comporte un épaulement **18e** situé en retrait du côté aval par rapport à l'épaulement intérieur **18d** de manière à ce que cet épaulement extérieur **18e** ne bute pas contre le capot de protection **5** avant que l'embout de raccordement **18** n'ait atteint sa position de fin de course en butée contre le raccord de sortie **17.**

N'importe quel embout de raccordement ayant un profil répondant aux exigences ci-dessus est adapté, mais on utilisera de préférence un embout de raccordement adapté répondant à la norme VP 635-1 ou VP 635-2.

Les différents éléments constitutifs de cette prise de gaz étant décrits, on va se tourner maintenant vers le fonctionnement de cette prise de gaz.

La prise de gaz telle que représentée sur les Figures 1 et 2 est dans une position de non-utilisation, à savoir une position de fermeture complète où l'embout de raccordement **18** n'est pas branché, la vanne est fermée et le capot de protection 5 obture l'ouverture **4** dans la façade **3** du boîtier.

Le ressort de compression **26** sur le raccord de sortie **17** du boisseau sphérique **7** est dans sa position initiale, et la bague de verrouillage **27** en aval du ressort de compression **26** sur le raccord de sortie **17** est logée dans le lamage **21** du corps de vanne **6,** verrouillant ainsi le boisseau sphérique **7** sur le corps de vanne **6.**

Puisque le verrouillage du boisseau sphérique **7** sur le corps de vanne **6** est assuré du côté amont du raccord de sortie **17,** le déverrouillage est rendu impossible même en cas de manipulation du capot de protection **5** et de la partie aval du raccord de sortie **17,** la prise offrant ainsi une protection sûre vis-à-vis des manipulations.

Dans cette position, le ressort de torsion **28** monté sur l'axe de rotation **29** du capot de protection **5** est dans sa position initiale assurant la fermeture complète du capot de protection, empêchant ainsi la pénétration de corps étrangers dans le boîtier **2.**

Dans cette position, la lentille transparente supérieure **30a** obturant le premier orifice dans le capot de protection **5** permet de visualiser la seconde pastille **20** de couleur rouge située sur la seconde partie de façade **3b,** cette pastille rouge **20** servant d'indicateur de fermeture de la vanne.

Cette position est également représentée sur la Figure **14**a.

A partir de cette position, on ouvre manuellement le capot de protection **5** en le faisant pivoter autour de son axe de rotation comme représenté par la flèche sur la Figure 14a, puis tout en maintenant le capot de protection **5** ouvert, on branche l'embout de raccordement **18** sur le raccord de sortie **17** du boisseau sphérique **7,** comme représenté sur la Figure 14b pour se retrouver dans la position représentée sur les Figures 5, 6 et 7.

Ces Figures 5, 6 et 7 représentent la prise de gaz avant le déverrouillage du boisseau sphérique **7,** dans une position où l'embout de raccordement **18** est branché sur le raccord de sortie **17,** l'étanchéité est établie entre l'embout de raccordement **18** et le boisseau sphérique **7,** la vanne est fermée et le capot de protection **5** est retenu par l'embout de raccordement **18.**

L'ouverture manuelle du capot de protection **5** par pivotement autour de son axe de rotation charge le ressort de torsion **28** monté sur l'axe de rotation **29** du capot de protection **5** et entraîne le passage du capot de protection **5** à travers la fente **3d** de la façade **3** pour pénétrer dans le boîtier **2** jusqu'en fin de course où sa partie arrière vient buter contre une surface intérieure du boîtier **2** ou contre le corps de vanne **6** comme représenté plus particulièrement sur la Figure 5.

Pour brancher l'embout de raccordement **18,** il faut maintenir manuellement le capot de protection **5** ouvert, sinon le ressort de torsion **28** rappelle le capot de protection **5** dans sa position initiale de fermeture complète.

Le branchement de l'embout de raccordement **18** est effectué en faisant coulisser la surface intérieure de l'embout de raccordement **18** sur la surface extérieure du raccord de sortie **17.**

Dans la position représentée par ces Figures 5, 6 et 7, le ressort de compression **26** sur le raccord de sortie **17** est toujours dans sa position initiale, et la bague de verrouillage **27** en aval du ressort de compression **26** sur le raccord de sortie **17** est toujours logée dans le lamage **21** du corps de vanne **6.**

Ainsi, dans cette position, le boisseau sphérique **7** est toujours verrouillé sur le corps de vanne **6.**

Cependant, puisque l'extrémité de l'embout de raccordement **18** est en appui contre la bague de verrouillage **27** et l'embout de raccordement **18** a dépassé la zone du raccord de sortie **17** comportant les joints toriques d'étanchéité **24,** l'étanchéité entre l'embout de raccordement **18** et le boisseau sphérique **7** est déjà établie.

Lorsque l'embout de raccordement **18** est branché, on peut relâcher le capot de protection **5.**

Le capot de protection **5** est alors rappelé vers sa position initiale de fermeture par le ressort de torsion **28** jusqu'à ce qu'il rencontre sur son trajet l'embout de raccordement **18.**

Ainsi, dans cette position, le capot de protection **5** est retenu par l'embout de raccordement **18** et la lentille transparente inférieure **30b** obturant le second orifice dans le capot de protection **5** permet de visualiser la seconde pastille **20** de couleur rouge située sur la seconde partie de la façade **3b.** On a donc l'indication que la vanne est encore fermée.

A partir de cette position, pour déverrouiller le boisseau sphérique **7** afin de permettre sa rotation jusqu'à l'ouverture de la vanne, on doit pousser axialement l'embout de raccordement **18.**

Lors de cette opération, l'extrémité de l'embout de raccordement **18** en appui contre la bague de verrouillage **27** repousse la bague de verrouillage **27** contre le ressort de compression **26** qui se comprime, dégageant ainsi la bague de verrouillage **27** du lamage **21** dans le corps de vanne **6.**

Pour déverrouiller le boisseau sphérique **7** afin de pouvoir l'entraîner en rotation, il faut pousser axialement l'embout de raccordement **18** sur le raccord de sortie **17** jusqu'à ce que celui-ci arrive en fin de course, à savoir que l'épaulement **18d** de la surface intérieure de l'embout de raccordement bute contre l'extrémité aval du raccord de sortie **17,** et que le ressort de compression **26** se trouve dans un état complètement comprimé, puis faire pivoter l'embout de raccordement **18** tout en maintenant celui-ci en fin de course sur le raccord de sortie **17.**

Si on relâche l'embout de raccordement **18** avant d'avoir engagé son pivotement, le ressort de compression **26** revient dans sa position initiale et repousse la bague de verrouillage **27** dans sa position initiale de blocage dans le lamage **21,** verrouillant ainsi automatiquement le boisseau sphérique **7** sur le corps de vanne **6.**

Ainsi, même en cas de mauvaise manipulation de l'embout de raccordement **18,** si le pivotement de celui-ci n'a pas été engagé, le verrouillage du boisseau sphérique **7** sur le corps de vanne **6** est automatiquement assuré.

Le boisseau sphérique **7** ne peut être déverrouillé que lorsque l'embout de raccordement **18** est maintenu en fin de course sur le raccord de sortie **17.**

Dans cette position de fin de course de l'embout de raccordement **18,** la bague de verrouillage **27** est désengagée du lamage **21,** et l'épaulement **18c** de la collerette **18b** de l'embout de raccordement **18** se trouve face à l'extrémité aval de la première rainure de guidage **22** courbée située dans la surface intérieure du logement de montage **12** du corps de vanne **6,** prêt à être engagé dans celle-ci.

Lorsque l'on entame le mouvement de rotation de l'embout de raccordement **18,** l'épaulement **18c** de la collerette **18b** de l'embout de raccordement **18** s'engage immédiatement dans la première rainure de guidage **22** courbée du corps de vanne **6.**

A partir du moment où l'épaulement **18c** de la collerette de l'embout de raccordement **18** est engagé dans la première rainure de guidage **22,** l'embout de raccordement **18** est retenu dans sa position en fin de course sur le corps de vanne **6.**

Ainsi, à partir du moment où la rotation du boisseau sphérique **7** a été initiée dans le sens de l'ouverture de la vanne, l'embout de raccordement **18** dans sa position de fin de course ne peut plus être débranché du raccord de sortie **17.**

Lors du mouvement de rotation de l'embout de raccordement **18,** l'épaulement **18c** de la collerette de l'embout de raccordement **18** glisse le long de la première rainure de guidage **22** courbée pour se retrouver dans la situation représentée sur les Figures 8 et 9.

En poursuivant le mouvement de rotation de l'embout de raccordement **18,** l'épaulement **18c** de la collerette de l'embout de raccordement passe dans la seconde rainure de guidage **23** puis glisse le long de celle-ci.

La vanne se trouve en position d'ouverture après que l'épaulement **18c** de la collerette de l'embout de raccordement ait passé dans la seconde rainure de guidage **23.**

Après le passage de l'épaulement **18c** de la collerette de l'embout de raccordement dans la seconde rainure de guidage **23,** l'embout de raccordement **18** va revenir en arrière sous l'action du ressort de compression **26** sur la bague de verrouillage **27** contre laquelle l'extrémité de l'embout de raccordement **18** est en appui.

Lors du retour en arrière de l'embout de raccordement **18,** l'épaulement **18c** de la collerette de l'embout de raccordement va coulisser dans la seconde rainure de guidage **23,** mais va venir buter contre une surface de blocage formée à l'extrémité aval de la seconde rainure de guidage **23** par le décalage entre les deux rainures de guidage **22, 23,** verrouillant ainsi l'embout de raccordement **18** sur le corps de vanne **6** dans une position où la vanne est ouverte, et empêchant toute rotation du boisseau sphérique 6, pour se retrouver dans la situation représentée sur les Figures 10, 11 et 14c.

Ainsi, le verrouillage du boisseau sphérique **7** dans la position où la vanne est ouverte est assuré par le verrouillage de l'embout de raccordement **18** sur le corps de vanne **6.**

Lors de la rotation de l'embout de raccordement **18,** le capot de protection **5** suit le mouvement de l'embout de raccordement pour rester en appui sur celui-ci comme représenté sur la Figure 14c, et ceci grâce au ressort de torsion **28** rappelant le capot de protection **5** dans sa position de fermeture initiale.

Dans cette situation où la vanne est ouverte représentée sur la Figure 14c, la lentille transparente supérieure **30a** obturant le premier orifice dans le capot de protection **5** permet de visualiser la première pastille **19** de couleur verte située sur la seconde partie de façade **3b,** cette première pastille **19** de couleur verte servant d'indicateur d'ouverture de la vanne.

Pour fermer la vanne et débrancher l'embout de raccordement **18** du raccord de sortie **17** à partir de la position où la vanne est ouverte représentée sur les Figures 10 et 11, il faut tout d'abord pousser axialement l'embout de raccordement **18** sur le raccord de sortie **17** jusqu'en fin de course pour déverrouiller le boisseau sphérique **7,** puis faire pivoter l'embout de raccordement **18,** comme représenté par les deux flèches sur la Fig. 14d.

La poussée axiale de l'embout de raccordement **18** sur le raccord de sortie **17** entraîne le dégagement de l'épaulement **18c** de la collerette de l'embout de raccordement de la surface de blocage formée à l'extrémité aval de la seconde rainure de guidage **23.**

Lorsque l'épaulement **18c** est dégagé de cette surface de blocage, le boisseau sphérique **7** est déverrouillé et peut passer dans la première rainure de guidage **22** dès que le pivotement de l'embout de raccordement **18** est engagé.

Ainsi, le boisseau sphérique **7** ne peut être déverrouillé que lorsque l'embout de raccordement **18** est poussé axialement en fin de course sur le raccord de sortie.

Lors de la rotation de l'embout de raccordement **18** après déverrouillage du boisseau sphérique **7,** l'épaulement **18c** de l'embout de raccordement **18** passe dans la première rainure de guidage **22,** la vanne se ferme, et on se retrouve dans la position représentée sur les Figures 8 et 9.

Dans cette position, l'embout de raccordement **18** est retenu dans sa position en fin de course sur le corps de vanne **6.**

En poursuivant le mouvement de rotation de l'embout **18,** l'épaulement **18c** de l'embout de raccordement **18** glisse dans la première rainure de guidage **22** jusqu'à son extrémité aval, la bague de verrouillage **27** se retrouvant alors au niveau du lamage **21.**

Dès que la bague de verrouillage se retrouve au niveau du le lamage **21,** le ressort de compression **26** retourne dans sa positon initiale et repousse la bague de verrouillage **27** dans sa position de blocage dans le lamage **21,** verrouillant ainsi automatiquement le boisseau sphérique **7** sur le corps de vanne **6** pour empêcher sa rotation.

Lors de la rotation de l'embout de raccordement **18** pour fermer la vanne, le capot de protection **5** reste en appui sur l'embout de raccordement tout en chargeant le ressort de torsion **28** monté sur l'axe de rotation **29** du capot de protection 5.

On se retrouve ainsi dans la position représentée sur les Figures 5, 6 et 7 où la vanne est fermée, où la rotation du boisseau sphérique **7** est bloquée, et l'embout de raccordement **18** n'est plus retenu sur le corps de vanne **6.**

Dans cette position, la lentille transparente inférieure **30b** obturant le second orifice dans le capot de protection **5** permet de visualiser la seconde pastille **20** de couleur rouge située sur la seconde partie de la façade **3b.** On a donc l'indication que la vanne est bien fermée et que l'embout peut être retiré.

A partir de cette position où la prise de gaz est sécurisée, on peut débrancher l'embout de raccordement **18** en le retirant axialement du raccord de sortie comme représenté par la flèche sur la Figure 14e.

Dès que l'embout de raccordement **18** est retiré, le capot de protection **5** revient automatiquement dans sa position de fermeture initiale, rappelé par le ressort de torsion **28** comme montré par la flèche sur la Figure 14f pour se retrouver dans la position de non-utilisation représentée sur les Figures 1 et 2.

Dans cette position de non-utilisation, le ressort de torsion **28** est dans sa position initiale assurant la fermeture complète du capot de protection, et la lentille transparente supérieure **30a** obturant le premier orifice dans le capot de protection permet de visualiser la seconde pastille de couleur rouge située sur la façade **3** du boîtier, indiquant que la vanne est fermée.

Dans cette forme d'exécution préférée, on a présenté une pastille rouge et une pastille verte en tant qu'indicateurs visuels de la position fermée et ouverte de la vanne, respectivement. Cependant, n'importe quels autres indicateurs visuels peuvent être utilisés.

De plus dans cette forme d'exécution préférée, on a présenté un capot de protection comportant deux orifices obturés par des lentilles transparentes. Cependant, le capot de protection peut comporter un seul orifice obturé par une lentille transparente, cette lentille transparente permettant de visualiser le premier indicateur visuel ou le second indicateur visuel selon un état de fermeture du capot de protection correspondant à un état de fermeture de la vanne ou à un état d'ouverture de la vanne.

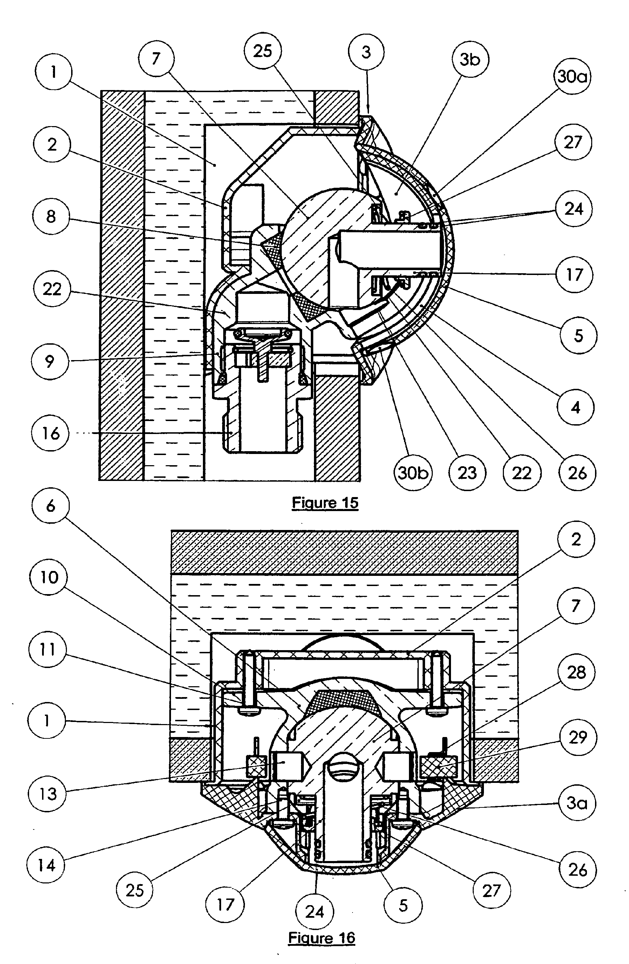

Les Figures 15 et 16 montrent une autre forme d'exécution préférée d'une prise de gaz murale de la présente invention dans sa version encastrée.

Plus particulièrement, les Figures 15 et 16 montrent une prise de gaz murale encastrée dans une position de non-utilisation où l'embout de raccordement n'est pas branché, le boisseau sphérique est verrouillé sur le corps de vanne, la vanne est fermée et le capot de protection obture l'ouverture dans la façade du boîtier.

La prise de gaz murale dans sa version encastrée diffère de la prise de gaz dans sa version en saille telle que décrite précédemment en ce que le boîtier **2** a une forme adaptée pour être encastré dans le mur.

Les éléments constitutifs de cette prise de gaz murale encastrée sont identiques à ceux de la prise de gaz murale en saillie décrite précédemment, et par conséquent les numéros de référence indiqués sur les Figures 15 et 16 sont identiques à ceux indiqués sur les Figures 1 et 2 représentant la prise de gaz murale dans sa version en saillie dans une position similaire de non-utilisation.

En outre, le fonctionnement de cette prise de gaz murale encastrée est identique au fonctionnement de la prise de gaz murale dans sa version en saillie telle que décrite précédemment.

Par conséquent, pour la description détaillée de la prise de gaz murale dans sa version encastrée, on peut se référer à la description détaillée de la prise murale en saillie faite en référence aux Figures 1-14, en tenant compte de la différence indiquée ci-dessus.

Grâce à la présente invention, il est possible de réaliser une prise de gaz murale en saillie ou encastrée à vanne rotative sécurisée comprenant un système de verrouillage empêchant la rotation du boisseau sphérique par verrouillage du boisseau sphérique sur le corps de vanne lorsque la vanne est fermée, et par verrouillage de l'embout de raccordement sur le corps de vanne lorsque la vanne est ouverte, le déverrouillage du boisseau sphérique sur le corps de vanne ou le déverrouillage de l'embout de raccordement sur le corps de vanne ne pouvant s'effectuer que par une poussée axiale de l'embout de raccordement sur le raccord de sortie du boisseau sphérique précédant la rotation, offrant ainsi une protection sûre vis-à-vis des manipulations.

Ce dispositif de verrouillage empêche également la déconnexion accidentelle de l'embout de raccordement durant toute la durée de l'ouverture de la vanne en retenant l'embout de raccordement sur le corps de vanne durant cette opération. En outre, cette prise de gaz murale selon l'invention comprend un moyen de fermeture du capot de protection, empêchant ainsi la pénétration de corps étrangers dans le boîtier.

L'invention a été décrite ci-dessus en s'appuyant sur deux formes de réalisation préférées.

Bien entendu, l'invention n'est pas limitée aux deux formes de réalisation décrites et représentées sur les dessins.

De nombreuses modifications peuvent être apportées par l'homme du métier, notamment du point de vue de la forme des éléments constitutifs, sans sortir de l'étendue de la protection de la présente invention telle que définie par les revendications.

## Revendications

1. Prise de gaz destinée à être raccordée de manière fixe à un réseau fixe d'alimentation de fluide gazeux, et permettant le branchement et le débranchement d'un embout de raccordement de type mâle adapté qui alimente en fluide gazeux par tuyau souple un appareil fonctionnant au gaz,
ladite prise de gaz comportant un boîtier **(2)** comportant une façade **(3)** munie d'une ouverture **(4)** verticale allongée et un capot de protection **(5)** prévu pour obturer l'ouverture **(4)** dans la façade **(3)** du boîtier, ledit boîtier **(2)** logeant une vanne rotative comportant un corps de vanne **(6)** et un boisseau sphérique **(7),** dans laquelle :
ledit corps de vanne (6) est fixé au boîtier **(2),** et comporte du côté amont un raccord d'entrée de fluide gazeux **(9)** intégré pour raccordement fixe à une conduite fixe d'alimentation de fluide gazeux, et comporte du côté aval un logement de montage **(12)** intégré pour le montage en rotation du boisseau sphérique **(7),** la partie du côté aval du logement de montage (12) comportant une ouverture **(15),**
ledit boisseau sphérique **(7)** comporte du côté aval, face à l'ouverture **(4)** de la façade **(3)** de boîtier, un raccord de sortie de fluide gazeux **(17)** intégré prévu pour brancher un embout de raccordement **(18)** de type mâle adapté, ledit boisseau sphérique **(7)** étant conçu pour pivoter sur un axe de rotation entre une position où la vanne est fermée et une position où la vanne est ouverte,
ladite ouverture **(4)** verticale allongée dans la façade **(3)** étant conçue pour permettre le branchement de l'embout de raccordement **(18)** sur le raccord de sortie **(17)** et le pivotement de l'embout de raccordement **(18)** lorsque celui-ci est branché sur le raccord de sortie **(17),**
ladite prise de gaz comportant en outre :
un système de verrouillage qui empêche la rotation du boisseau sphérique **(7)** par verrouillage du boisseau sphérique **(7)** sur le corps de vanne **(6)** lorsque la vanne est fermée et par verrouillage de l'embout de raccordement **(18)** sur le corps de vanne **(6)** après branchement de celui-ci sur le raccord de sortie **(17)** lorsque la vanne est ouverte, et qui après déverrouillage du boisseau sphérique **(7)** sur le corps de vanne **(6)** ou déverrouillage de l'embout de raccordement **(18)** sur le corps de vanne **(6),** retient l'embout de raccordement **(18)** sur le corps de vanne **(6)** durant les opérations d'ouverture et de fermeture de la vanne par rotation, et
un moyen de fermeture du capot de protection permettant un rappel automatique du capot de protection **(5)** vers une position initiale dans laquelle il obture complètement l'ouverture **(4)** dans la façade **(3)** du boîtier.

2. Prise de gaz selon la revendication 1, dans laquelle ladite vanne rotative comporte en outre un dispositif **(8)** prévu pour assurer l'étanchéité entre le corps de vanne **(6)** et le boisseau sphérique **(7).**

3. Prise de gaz selon la revendication 1 ou 2, dans laquelle le raccord de sortie **(17)** comporte sur sa surface extérieure du côté aval au moins un joint torique d'étanchéité **(24).**

4. Prise de gaz selon l'une quelconque des revendication 1 à 3, dans laquelle ledit système de verrouillage qui empêche la rotation du boisseau sphérique **(7)** est conçu pour être déverrouillé par une poussée axiale de l'embout de raccordement **(18)** sur le raccord de sortie **(17).**

5. Prise de gaz selon l'une quelconque des revendications 1 à 4, dans laquelle ledit système de verrouillage comporte des parties usinées dans la surface intérieure du logement de montage **(12)** pour boisseau sphérique **(7)** du corps de vanne **(6)** et des éléments situés en amont sur le raccord de sortie **(17)** du boisseau sphérique **(7).**

6. Prise de gaz murale selon l'une quelconque des revendications 1 à 5, dans laquelle ledit capot de protection **(5)** est monté en rotation par rapport à la façade **(3)** du boîtier sur un axe de rotation **(29)** de telle sorte qu'il puisse pivoter autour de l'axe de rotation du boisseau sphérique **(7),** et dans laquelle ladite façade **(3)** du boîtier comporte une partie de façade **(3b)** comportant l'ouverture **(4)** verticale allongée et une fente **(3d)** formant un passage pour le capot de protection **(5),** ledit capot de protection (**5**) étant conçu de manière à permettre sa révolution en passant à travers la fente (**3d**) de la façade de boîtier sans toucher l'extrémité du raccord de sortie **(17)** du boisseau sphérique **(7).**

7. Prise de gaz selon la revendication 6, dans laquelle ledit moyen de fermeture du capot de protection comprend un ressort de torsion **(28)** monté sur l'axe de rotation **(29)** du capot de protection **(5).**

8. Prise de gaz selon la revendication 6 ou 7, dans laquelle ladite partie de façade **(3b)** est une partie de façade en saille ayant une forme de révolution autour de l'axe de rotation **(29)** du capot de protection **(5).**

9. Prise de gaz selon l'une quelconque des revendications 6 à 8, dans laquelle ladite partie de façade **(3b)** comporte un premier indicateur visuel **(19)** et un second indicateur visuel **(20)** différent du premier indicateur visuel **(19),** ledit capot de protection **(5)** comporte au moins un orifice obturé par une lentille transparente **(30a),** cette lentille transparente permettant de voir le premier indicateur visuel **(19)** ou le second indicateur visuel **(20)** sur la partie de façade **(3b)** derrière le capot de protection **(5)** selon un état de fermeture du capot de protection **(5)** correspondant à un état de fermeture de la vanne ou à un état d'ouverture de la vanne.

10. Prise de gaz selon la revendication 9, dans laquelle ledit premier indicateur visuel **(19)** est une pastille verte, ledit second indicateur visuel **(20)** est une pastille rouge, ladite lentille transparente **(30a)** permettant de voir ladite pastille rouge lorsque la vanne est fermée et ladite pastille verte lorsque la vanne est ouverte.

11. Prise de gaz selon l'une quelconque des revendications 1 à 10 dans laquelle
ledit corps de vanne **(6)** comporte dans la surface intérieure du logement de montage pour boisseau sphérique **(12),** symétriquement en partant du côté aval de chaque côté de l'ouverture **(15),** un lamage **(21),** une première rainure de guidage **(22)** courbée et une seconde rainure de guidage **(23)** courbée légèrement plus éloignée de l'axe de rotation du boisseau sphérique que la première rainure de guidage **(22),** ledit lamage **(21)** et lesdites première et seconde rainures **(22, 23)** étant des parties usinées dans la surface intérieure du logement de montage pour boisseau sphérique **(12)** du corps de vanne **(6)** et faisant partie du système de verrouillage,
ledit raccord de sortie **(17)** comporte sur sa partie amont une gorge **(25)** servant d'appui à un ressort de compression **(26),** et comporte du côté aval du ressort de compression une bague de verrouillage **(27)** pouvant coulisser sur le raccord de sortie **(17),** ces éléments faisant partie du système de verrouillage.

12. Prise de gaz selon la revendication 11, dans laquelle ladite bague de verrouillage **(27)** sur le raccord de sortie **(17)** du boisseau sphérique **(7)** est bloquée dans le lamage **(21)** du corps de vanne **(6)** lorsque la vanne est fermée, bloquant ainsi la rotation du boisseau sphérique **(7),** ladite bague de verrouillage **(27)** pouvant être dégagée du lamage **(21)** par une poussée axiale de l'embout de raccordement **(18)** après branchement de celui-ci sur le raccord de sortie **(17)** pour déverrouiller le boisseau sphérique **(7)** sur le corps de vanne **(6)** et permettre la rotation du boisseau sphérique **(7).**

13. Prise de gaz selon la revendication 11 ou 12, dans laquelle un épaulement **(18c)** extérieur de l'embout de raccordement **(18)** est en butée contre une surface de blocage formée à l'extrémité aval de la seconde rainure de guidage **(23)** par le décalage entre les deux rainures de guidage **(22, 23)** lorsque la vanne est ouverte, bloquant ainsi la rotation du boisseau sphérique **(7),** ledit épaulement **(18c)** de l'embout de raccordement **(18)** pouvant être dégagé de ladite surface de blocage par une poussée axiale de l'embout de raccordement **(18)** sur le raccord de sortie **(17)** pour déverrouiller l'embout de raccordement **(18)** sur le corps de vanne **(6)** et permettre la rotation du boisseau sphérique **(7)**

14. Prise de gaz selon l'une quelconque des revendications 11 à 13, dans laquelle un épaulement **(18c)** extérieur de l'embout de raccordement **(18)** est retenu dans l'une des première et seconde rainures de guidage **(22, 23)** durant l'opération d'ouverture et de fermeture de la vanne par rotation après déverrouillage du boisseau sphérique **(7)** sur le corps de vanne **(6)** ou déverrouillage de l'embout de raccordement sur le corps de vanne **(6).**

15. Prise de gaz selon l'une quelconque des revendications 1 à 14, dans laquelle ledit embout de raccordement **(18)** adapté comporte une extrémité de branchement **(18a)** comportant un diamètre intérieur sensiblement égal au diamètre extérieur du raccord de sortie **(17)** de façon à ce que l'embout de raccordement **(18)** puisse coulisser sur la surface extérieure du raccord de sortie **(17),** ladite extrémité de branchement **(18a)** comportant en outre une collerette **(18b)** comportant un épaulement **(18c),** la surface intérieure de l'embout de raccordement **(18)** adapté comportant en outre un épaulement **(18d)** formant une butée pour l'extrémité aval du raccord de sortie **(17)** lorsque l'embout est coulissé jusqu'en fin de course sur la surface extérieure du raccord de sortie **(17),** la surface extérieure de l'embout de raccordement comportant en outre un épaulement **(18e)** situé en retrait du côté aval par rapport à l'épaulement intérieur **(18d)** de manière à ce que cet épaulement extérieur **(18e)** ne bute pas contre le capot de protection **(5)** avant que l'embout de raccordement **(18)** n'ait atteint sa position de fin de course en butée contre le raccord de sortie **(17).**

## Claims

1. A gas plug intended to be fixedly connected to a fixed gaseous fluid supply network, and allowing connection and disconnection of a suitable connecting end piece of the male type which supplies gaseous fluid through a flexible pipe to a device operating with gas,
said gas plug including a casing (2) including a front side (3) provided with an elongated vertical aperture (4) and a protective cap (5) provided for obturating the aperture (4) in the front side (3) of the casing, said casing (2) housing a rotary valve including a valve body (6) with a spherical ball (7), wherein:
said valve body (6) is attached to the casing (2) and includes on the upstream side a gaseous fluid inlet fitting (9) integrated for fixed connection to a fixed gaseous fluid supply conduit, and includes on the downstream side a an integrated mounting housing (12) for the rotary mounting of the spherical ball (7), the portion of the downstream side of the mounting housing (12) including an aperture (15),
said spherical ball (7) includes on the downstream side, facing the aperture (4) of the casing front side (3), an integrated gaseous fluid outlet fitting (17) provided for connecting a suitable connecting end piece (18) of the male type, said spherical ball (7) being designed so as to pivot on an axis of rotation between a position where the valve is closed and a position where the valve is opened,
said elongated vertical aperture (4) in the front side (3) being designed so as to allow connection of the connecting end piece (18) to the outlet fitting (17) and pivoting of the connecting end piece (18) when the latter is connected to the outlet fitting (17),
said gas plug further including:
a locking system which prevents rotation of the spherical ball (7) by locking the spherical ball (7) on the valve body (6) when the valve is closed and by locking the connecting end piece (18) on the valve of body (6) after connection of the latter to the outlet fitting (17) when the valve is open, and which after unlocking of the spherical ball (7) on the valve body (6) or unlocking of the connecting end piece (18) on the valve body (6), retains the connecting end piece (18) on the valve body (6) during the operations for opening and closing the valve by rotation, and
a means for closing the protected cap allowing automatic return of the protected cap (5) to an initial position in which it completely obturates the aperture (4) in the front side (3) of the casing.

2. The gas plug according to claim 1, wherein said rotary valve further includes a device (8) provided for ensuring the seal between the valve body (6) and the spherical ball (7).

3. The gas plug according to claim 1 or 2, wherein the outlet fitting (17) includes on its outer surface on the downstream side at least one O-ring seal gasket (24).

4. The gas plug according to any of claims 1 to 3, wherein said locking system which prevents rotation of the spherical ball (7) is designed so as to be unlocked by an axial thrust of the connecting end piece (18) on the outlet fitting (17).

5. The gas plug according to any of claims 1 to 4, wherein said locking system includes machined portions in the inner surface of the mounting housing (12) for a spherical ball (7) of the valve body (6) and elements located upstream on the outlet fitting (17) of the spherical ball (7).

6. The wall gas plug according to any of claims 1 to 5, wherein said protected cap (5) is rotatably mounted relatively to the front side (3) of the casing on an axis of rotation (29) so that it may pivot around the axis of rotation of the spherical ball (7), and wherein said front side (3) of the casing includes a front side portion (3b) including the elongated vertical aperture (4) and a slot (3d) forming a passage for the protective cap (5), said protective cap (5) being designed so as to allow it to revolve by passing through the slot (3d) of the casing front side without touching the end of the outlet fitting (17) of the spherical ball (7).

7. The gas plug according to claim 6, wherein said means for closing the protective cap comprises a torsion spring (28) mounted on the axis of rotation (29) of the protective cap (5).

8. The gas plug according to claim 6 or 7, wherein said front side portion (3b) is a protruding front side portion having an axisymmetrical shape around the axis of rotation (29) of the protective cap (5).

9. The gas plug according to any of claims 6 to 8, wherein said front side portion (3b) includes a first visual indicator (19) and a second visual indicator (20) different from the first visual indicator (19), said protective cap (5) including at least one orifice obturated by a transparent lens (30a), this transparent lens allowing the first visual indicator (19) or the second visual indicator (20) to be seen on the front side portion (3b) behind the protective cap (5) according to a closed state of the protective cap (5) corresponding to a closed state of the valve or to an open state of the valve.

10. The gas plug according to claim 9, wherein said first visual indicator (19) is a green disk, said second visual indicator (20) is a red disk, said transparent lens (30a) allowing said red disk to be seen when the valve is closed and said green disk to be seen when the valve is open.

11. The gas plug according to any of claims 1 to 10, wherein
said valve body (6) includes in the inner surface of the housing for mounting a spherical ball (12), symmetrically from the downstream side of each side of the aperture (15), a spot facing (21), a first bent guiding groove (22) and a second bent guiding groove (23) slightly further away from the axis of rotation of the spherical ball than the first guiding groove (22), said spot facing (21) and said first and second grooves (22, 23) being machined portions in the inner surface of the housing for mounting a spherical ball (12) of the valve body (6) and being part of the locking system,
said outlet fitting (17) includes on its upstream portion a groove (25) being used as a support for a compression string (26), and includes on the downstream side of the compression spring a locking ring (27) which may slide on the outlet fitting (17), these elements being part of the locking system.

12. The gas plug according to claim 11, wherein said locking ring (27) on the outlet fitting (17) of the spherical ball (7) is blocked in the spot facing (21) of the valve body (6) when the valve is closed, thereby blocking the rotation of the spherical ball (7), said locking ring (27) may be disengaged from the spot facing (21) by an axial thrust of the connecting end piece (18) after connecting the latter to the outlet fitting (17) in order to unlock the spherical ball (7) on the valve body (6) and to allow rotation of the spherical ball (7).

13. The gas plug according to claim 11 or 12, wherein an outer shoulder (18c) of the connecting end piece (18) is in abutment against a blocking surface formed at the downstream end of the second guide groove (23) by the shift between both guiding grooves (22, 23) when the valve is open, thereby blocking the rotation of the spherical ball (7), said shoulder (18c) of the connecting end piece (18) may be disengaged from said blocking surface by an axial thrust of the connecting end piece (18) on the outlet fitting (17) in order to unlock the connecting end piece (18) on the valve body (10) and allow rotation of the spherical ball (7).

14. The gas plug according to any of claims 11 to 13, wherein an outer shoulder (18c) of the connecting end piece (18) is retained in one of the first and second guiding grooves (22, 23) during the operation for opening and closing the valve by rotation after unlocking the spherical ball (7) on the valve body (6) or unlocking the connecting end piece on the valve body (6).

15. The gas plug according to any of claims 1 to 14, wherein said suitable connecting end piece (18) includes a connecting end (18a) including an inner diameter substantially equal to the outer diameter of the outlet fitting (17) so that the connecting end piece (18) may slide on the outer surface of the outlet fitting (17), said connecting end (18a) further including a flange (18b) including a shoulder (18c), the inner surface of the suitable connecting end piece (18) further including a shoulder (18d) forming an abutment for the downstream end of the outlet fitting (17) when the end piece is slid up to the end of travel on the outer surface of the outlet fitting (17), the outer surface of the connecting end piece further including a shoulder (18e) located and set back on the downstream side relatively to the inner shoulder (18d) so that this outer shoulder (18e) does not abut against the protective cap (5) before the connecting end piece (18) has reached its end-of-travel position in abutment against the outlet fitting (17).

## Patentansprüche

1. Gasanschluss, der für die feste Verbindung mit einem Festnetz zur Versorgung von gasförmigem Fluid bestimmt ist und der das Anschließen und das Lösen eines passenden Einsteckverbindungsstücks gestattet, das ein Gerät, welches mit Gas funktioniert, durch einen Schlauch mit gasförmigem Fluid versorgt,
wobei der Gasanschluss ein Gehäuse (2) mit einer Vorderseite (3) aufweist, die mit einer länglichen, vertikalen Öffnung (4) und einer Schutzkappe (5), die zum Verschließen der Öffnung (4) in der Vorderseite (3) des Gehäuses bestimmt ist, versehen ist, wobei das Gehäuse (2) Sitz eines Drehventils ist, das einen Ventilkörper (6) und ein kugelförmiges Verschlussstück (7) aufweist, **dadurch gekennzeichnet, dass**:
der Ventilkörper (6) an dem Gehäuse (2) befestigt ist und stromaufseitig einen Einlassstutzen von gasförmigem Fluid (9) aufweist, der für die feste Verbindung mit einer festen Leitung zur Versorgung von gasförmigem Fluid integriert ist, und stromabseitig einen Lagersitz (12) aufweist, der für die drehbare Lagerung des kugelförmigen Verschlussstücks (7) integriert ist, wobei der stromabseitige Abschnitt des Lagersitzes (12) eine Öffnung (15) aufweist,
das kugelförmige Verschlussstück (7) stromabseitig, zu der Öffnung (4) der Vorderseite (3) des Gehäuses hin, einen integrierten Auslassstutzen von gasförmigem Fluid (17) aufweist, der zum Anschließen eines passenden Einsteckverbindungsstücks (18) vorgesehen ist, wobei das kugelförmige Verschlussstück (7) dafür ausgelegt ist, sich auf einer Drehachse zwischen einer Stellung, in der das Ventil geschlossen ist, und einer Stellung, in der das Ventil geöffnet ist, zu drehen,
die längliche vertikale Öffnung (4) in der Vorderseite (3) dafür ausgelegt ist, das Anschließen des Verbindungsstücks (18) an den Auslassstutzen (17) und das Drehen des Verbindungsstücks (18), wenn dieses an dem Auslassstutzen (17) angeschlossen ist, zu gestatten,
der Gasanschluss darüber hinaus umfasst:
ein Verriegelungssystem, das die Drehung des kugelförmigen Verschlussstücks (7) durch Verriegeln des kugelförmigen Verschlussstücks (7) an dem Ventilkörper (6), wenn das Ventil geschlossen ist, und durch Verriegeln des Verbindungsstücks (18) an dem Ventilkörper (6) nach dessen Anschluss an den Auslassstutzen (17), wenn das Ventil geöffnet ist, verhindert, und das nach dem Entriegeln des kugelförmigen Verschlussstücks (7) an dem Ventilkörper (6) oder dem Entriegeln des Verbindungsstücks (18) an dem Ventilkörper (6) während der Vorgänge des Öffnens und des Schließens des Ventils durch Drehung das Verbindungsstück (18) an dem Ventilkörper (6) hält, und
Schließmittel der Schutzkappe, die eine selbsttätige Rückwärtsbewegung der Schutzkappe (5) in eine Ausgangsstellung, in der sie die Öffnung (4) in der Vorderseite (3) des Gehäuses vollständig verschließt, gestatten.

2. Gasanschluss nach Anspruch 1, **dadurch gekennzeichnet, dass** das Drehventil darüber hinaus eine Vorrichtung (8) aufweist, die zum Sicherstellen der Dichtheit zwischen dem Ventilkörper (6) und dem kugelförmigen Verschlussstück (7) vorgesehen ist.

3. Gasanschluss nach Anspruch 1 oder 2, **dadurch gekennzeichnet, dass** der Auslassstutzen (17) auf seiner stromabseitigen Außenfläche mindestens einen Runddichtring (24) aufweist.

4. Gasanschluss nach einem der Ansprüche 1 bis 3, **dadurch gekennzeichnet, dass** das Verriegelungssystem, das die Drehung des kugelförmigen Verschlussstücks (7) verhindert, dafür ausgelegt ist, dass es durch einen Längsschub des Verbindungsstücks (18) an dem Auslassstutzen (17) entriegelt wird.

5. Gasanschluss nach einem der Ansprüche 1 bis 4, **dadurch gekennzeichnet, dass** das Verriegelungssystem bearbeitete Abschnitte in der Innenfläche des Lagersitzes (12) für das kugelförmige Verschlussstück (7) des Ventilkörpers (6) und stromaufseitig angeordnete Elemente an dem Auslassstutzen (17) des kugelförmigen Verschlussstücks (7) aufweist.

6. Wandgasanschluss nach einem der Ansprüche 1 bis 5, wobei die Schutzkappe (5) drehbar in Bezug auf die Vorderseite (3) des Gehäuses auf einer Drehachse (29) so gelagert ist, dass sie sich um die Drehachse des kugelförmigen Verschlussstücks (7) drehen kann, und wobei die Vorderseite (3) des Gehäuses einen Vorderseitenabschnitt (3b) mit der länglichen, vertikalen Öffnung (4) und einem Schlitz (3d), der einen Durchgang für die Schutzkappe (5) bildet, aufweist, wobei die Schutzkappe (5) so ausgelegt ist, dass ihre Drehung beim Passieren durch den Schlitz (3d) der Vorderseite des Gehäuses ohne Berühren des Endes des Auslassstutzens (17) des kugelförmigen Verschlussstücks (7) gestattet wird.

7. Gasanschluss nach Anspruch 6, **dadurch gekennzeichnet, dass** die Schließmittel der Schutzkappe eine Torsionsfeder (28) umfassen, die auf der Drehachse (29) der Schutzkappe (5) gelagert ist.

8. Gasanschluss nach Anspruch 6 oder 7, **dadurch gekennzeichnet, dass** der Vorderseitenabschnitt (3b) ein vorspringender Vorderseitenabschnitt ist, der eine Kreisform um die Drehachse (29) der Schutzkappe (5) aufweist.

9. Gasanschluss nach einem der Ansprüche 6 bis 8, **dadurch gekennzeichnet, dass** der Vorderseitenabschnitt (3b) einen ersten Sichtanzeiger (19) und einen zweiten Sichtanzeiger (20), der anders als der erste Sichtanzeiger (19) ist, aufweist, wobei die Schutzkappe (5) mindestens ein durch eine transparente Linse (30a) verschlossenes Loch aufweist, wobei diese transparente Linse gestattet, den ersten Sichtanzeiger (19) oder den zweiten Sichtanzeiger (20) an dem Vorderseitenabschnitt (3b) hinter der Schutzkappe (5) gemäß einem Schließzustand der Schutzkappe (5), der einem Schließzustand des Ventils oder einem Öffnungszustand des Ventils entspricht, zu sehen.

10. Gasanschluss nach Anspruch 9, **dadurch gekennzeichnet, dass** der erste Sichtanzeiger (19) ein grünes Plättchen ist, der zweite Sichtanzeiger (20) ein rotes Plättchen ist, wobei die transparente Linse (30a) gestattet, das rote Plättchen zu sehen, wenn das Ventil geschlossen ist, und das grüne Plättchen, wenn das Ventil geöffnet ist.

11. Gasanschluss nach einem der Ansprüche 1 bis 10, **dadurch gekennzeichnet, dass**
der Ventilkörper (6) in der Innenfläche des Lagersitzes für das kugelförmige Verschlussstück (12), symmetrisch stromabseitig ausgehend von jeder Seite der Öffnung (15), eine Senkung (21), eine erste gekrümmte Führungsnut (22) und eine zweite gekrümmte Führungsnut (23), die etwas weiter von der Drehachse des kugelförmigen Verschlussstücks entfernt ist, als die erste Führungsnut (22), aufweist, wobei die Senkung (21) und die erste und die zweite Nut (22, 23) bearbeitete Abschnitte in der Innenfläche des Lagersitzes für das kugelförmige Verschlussstück (12) des Ventilkörpers (6) sind und Bestandteile des Verriegelungssystems sind,
der Auslassstutzen (17) auf seinem stromaufseitigen Abschnitt eine Rille (25) aufweist, die als Auflager für eine Druckfeder (26) dient, und stromabseitig von der Druckfeder einen Verriegelungsring (27) aufweist, der auf dem Auslassstutzen (17) gleiten kann, wobei diese Elemente Bestandteile des Verriegelungssystems sind.

12. Gasanschluss nach Anspruch 11, **dadurch gekennzeichnet, dass** der Verriegelungsring (27) an dem Auslassstutzen (17) des kugelförmigen Verschlussstücks (7) in der Senkung (21) des Ventilkörpers (6) blockiert ist, wenn das Ventil geschlossen ist, und so die Drehung des kugelförmigen Verschlussstücks (7) blockiert, wobei der Verriegelungsring (27) durch einen Längsschub des Verbindungsstücks (18) nach dessen Anschluss an den Auslassstutzen (17) aus der Senkung (21) ausgerückt werden kann, um das kugelförmige Verschlussstück (7) an dem Ventilkörper (6) zu entriegeln und die Drehung des kugelförmigen Verschlussstücks (7) zu gestatten.

13. Gasanschluss nach Anspruch 11 oder 12, **dadurch gekennzeichnet, dass** ein äußerer Absatz (18c) des Verbindungsstücks (18) sich in Anschlag gegen eine Blockierfläche befindet, die am stromabseitigen Ende der zweiten Führungsnut (23) durch den Versatz zwischen den zwei Führungsnuten (22, 23) gebildet wird, wenn das Ventil geöffnet ist, und so die Drehung des kugelförmigen Verschlussstücks (7) blockiert, wobei der Absatz (18c) des Verbindungsstücks (18) durch einen Längsschub des Verbindungsstücks (18) an dem Auslassstutzen (17) aus der Blockierfläche ausgerückt werden kann, um das Verbindungsstück (18) an dem Ventilkörper (6) zu entriegeln und die Drehung des kugelförmigen Verschlussstücks (7) zu gestatten.

14. Gasanschluss nach einem der Ansprüche 11 bis 13, **dadurch gekennzeichnet, dass** ein äußerer Absatz (18c) des Verbindungsstücks (18) während des Vorgangs des Öffnens und des Schließens des Ventils durch Drehung nach Entriegelung des kugelförmigen Verschlussstücks (7) an dem Ventilkörper (6) oder Entriegelung des Verbindungsstücks an dem Ventilkörper (6) in einer der ersten und der zweiten Führungsnut (22, 23) gehalten wird.

15. Gasanschluss nach einem der Ansprüche 1 bis 14, **dadurch gekennzeichnet, dass** das passende Verbindungsstück (18) ein Anschlussende (18a) mit einem Innendurchmesser aufweist, der etwa gleich dem Außendurchmesser des Auslassstutzens (17) ist, so dass das Verbindungsstück (18) auf der Außenfläche des Auslassstutzens (17) gleiten kann, wobei das Anschlussende (18a) darüber hinaus einen Bund (18b) mit einem Absatz (18c) aufweist, wobei die Innenfläche des passenden Verbindungsstücks (18) darüber hinaus einen Absatz (18d) aufweist, der einen Anschlag für das stromabseitige Ende des Auslassstutzens (17) bildet, wenn das Verbindungsstück bis in die Endlage auf der Außenfläche des Auslassstutzens (17) gleiten gelassen wird, wobei die Außenfläche des Verbindungsstücks darüber hinaus einen Absatz (18e) aufweist, der stromabseitig im Verhältnis zum inneren Absatz (18d) zurückspringend angeordnet ist, so dass dieser äußere Absatz (18e) nicht gegen die Schutzkappe (5) anschlägt, bevor das Verbindungsstück (18) seine Endlage in Anschlag gegen den Auslassstutzen (17) erreicht hat.
